(19) Europäisches Patentamt
European Patent Office
Office européen des brevets

(11) **EP 3 478 949 B1**

(12) **FASCICULE DE BREVET EUROPEEN**

(45) Date de publication et mention de la délivrance du brevet:
**22.04.2020 Bulletin 2020/17**

(21) Numéro de dépôt: **17740429.0**

(22) Date de dépôt: **14.06.2017**

(51) Int Cl.:
*F01N 11/00* *(2006.01)*        *F01N 3/021* *(2006.01)*
*F01N 9/00* *(2006.01)*

(86) Numéro de dépôt international:
**PCT/FR2017/051535**

(87) Numéro de publication internationale:
**WO 2018/007701 (11.01.2018 Gazette 2018/02)**

(54) **PROCEDE DE DIAGNOSTIC D'UN DISPOSITIF DE DEPOLLUTION DES GAZ D'ECHAPPEMENT D'UN VEHICULE AUTOMOBILE**

DIAGNOSEVERFAHREN FÜR EINE KRAFTFAHRZEUGABGASDEKONTAMINATIONSVORRICHTUNG

DIAGNOSTIC METHOD FOR A MOTOR VEHICLE EXHAUST GAS DEPOLLUTION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.07.2016 FR 1656350**

(43) Date de publication de la demande:
**08.05.2019 Bulletin 2019/19**

(73) Titulaire: **PSA Automobiles S.A.**
**78300 Poissy (FR)**

(72) Inventeur: **CHASSEFEYRE, Vincent**
**77290 MITRY MORY (FR)**

(56) Documents cités:
**DE-A1-102009 003 091      DE-A1-102014 209 794**
**FR-A1- 3 017 412      US-A1- 2011 143 449**

**Description**

L'invention concerne, de façon générale, le post-traitement des gaz d'échappement d'un moteur thermique, en particulier dans un véhicule automobile.

L'invention porte plus particulièrement sur un procédé de diagnostic de la présence et du fonctionnement d'un dispositif de dépollution des gaz d'échappement d'un moteur de véhicule automobile.

Aujourd'hui, un véhicule automobile à moteur thermique émet différents gaz, dits d'échappement, suite à la combustion de carburant et d'air dans le moteur thermique. L'émission de ces gaz d'échappement est réglementée par des normes visant à limiter la teneur en certains gaz dans les gaz d'échappement, par post-traitement des gaz d'échappement d'un moteur.

Aussi, il est connu de traiter les gaz d'échappement dans la ligne d'échappement des gaz, autrement dit après leur émission. Une telle ligne d'échappement comprend un catalyseur et un filtre à particules, également désigné GPF, pour Gasoline Particulate Filters en langue anglaise, dans le cas d'un moteur à essence.

Afin de garantir le bon fonctionnement du véhicule, il est connu de vérifier la présence du catalyseur et du filtre à particules permettant de garantir le respect des normes d'émission des gaz d'échappement.

Dans ce but, on connait par le document FR2864145 un dispositif de détection d'un filtre à particules. Un tel dispositif comprend un premier capteur de température adapté pour mesurer la température des gaz d'échappement en amont du filtre à particules et un deuxième capteur de température adapté pour mesurer la température des gaz d'échappement en aval du filtre à particules. Lors d'une variation de la température des gaz d'échappement, le deuxième capteur mesure cette variation avec un décalage temporel par rapport au premier capteur du fait de l'inertie thermique du filtre à particules placé entre les deux capteurs. Le dispositif de détection mesure alors ce décalage temporel et détermine la présence du filtre à particules si ce décalage temporel est supérieur à une valeur seuil.

Cependant une telle solution présente des inconvénients. Tout d'abord, le dispositif de détection nécessite d'installer un capteur de température en amont du filtre à particules et un capteur de température en aval du filtre à particules, ce qui augmente le nombre d'éléments dans le véhicule automobile et augmente les coûts de fabrication.

De plus, un tel dispositif ne permet pas de détecter les phases de fonctionnement du filtre à particules, telle que la phase de régénération passive, mais uniquement la présence du filtre à particules entre les capteurs de température.

On connait encore du document FR3017412A1 un procédé de diagnostic du dispositif de dépollution des gaz d'échappement d'un moteur thermique, cependant il reste encore un besoin pour optimiser un tel diagnostic.

L'invention vise donc à résoudre ces inconvénients en proposant un procédé de diagnostic du dispositif de dépollution des gaz d'échappement d'un moteur thermique de véhicule automobile permettant de détecter la présence du dispositif de dépollution ainsi que son fonctionnement.

Pour parvenir à ce résultat, la présente invention concerne un procédé de diagnostic d'un dispositif de dépollution d'un véhicule automobile, ledit véhicule comprenant un moteur thermique à essence et un dispositif de dépollution des gaz d'échappement dudit moteur thermique à essence, lesdits gaz d'échappement étant adaptés pour traverser ledit dispositif de dépollution d'amont en aval, ledit véhicule comprenant une sonde à oxygène amont placée en amont du dispositif de dépollution et une sonde à oxygène aval placée en aval du dispositif de dépollution, ledit procédé comprenant :

- une étape de détermination de la température des gaz d'échappement par la sonde à oxygène amont,
- une étape de détermination de la température des gaz d'échappement par la sonde à oxygène aval,
- une étape de détection de la présence du dispositif de dépollution entre les sondes à oxygène si l'intervalle de temps entre un premier temps auquel la température déterminée par la sonde à oxygène amont atteint une valeur prédéterminée et un deuxième temps auquel la température déterminée par la sonde à oxygène aval atteint ladite valeur prédéterminée est supérieur à une valeur seuil prédéterminée, et
- une étape de détermination de la régénération du dispositif de dépollution si les températures déterminées entraînent la détection d'un phénomène exothermique entre ladite sonde à oxygène amont et ladite sonde aval.

Grâce au procédé selon l'invention, il est possible de déterminer la température des gaz d'échappement à partir des sondes à oxygène, ce qui limite le nombre d'élément nécessaire et limite ainsi les coûts de mise en œuvre du procédé. De plus, il est possible de déterminer à la fois la présence d'un dispositif de dépollution et la phase de fonctionnement du dispositif de dépollution en régénération grâce aux différentes comparaisons des températures mesurées par les sondes à oxygène.

Avantageusement, le procédé comprend une étape préliminaire d'augmentation de la richesse du mélange injecté dans le moteur thermique et une étape préliminaire de diminution de la richesse du mélange injecté dans le moteur thermique de manière à générer une variation de la température des gaz d'échappement.

Avantageusement, chaque étape de détermination de la température comprend une sous-étape de génération d'un pic de courant dans la sonde à oxygène.

Avantageusement, chaque étape de détermination de la température comprend une sous-étape de mesure de la valeur de la résistance de Nernst de la sonde à oxygène lors dudit pic de courant.

Avantageusement, chaque étape de détermination de la température comprend une sous-étape de détermination de la température à partir de ladite valeur de la résistance de Nernst mesurée et d'une courbe prédéterminée représentant la résistance de Nernst en fonction de la température.

Avantageusement, le dispositif de dépollution comprend un catalyseur et un filtre à particules.

Avantageusement, la régénération du dispositif de dépollution comprend la régénération passive du filtre à particules.

L'invention concerne également un véhicule automobile comprenant un moteur thermique à essence et un dispositif de dépollution des gaz d'échappement dudit moteur thermique à essence, lesdits gaz d'échappement étant adaptés pour traverser ledit dispositif de dépollution d'amont en aval, ledit véhicule comprenant une sonde à oxygène amont placée en amont du dispositif de dépollution et une sonde à oxygène aval placée en aval du dispositif de dépollution, ledit véhicule comprenant un calculateur configuré pour mettre en œuvre le procédé tel que décrit précédemment, de diagnostic dudit dispositif de dépollution.

Avantageusement, le dispositif de dépollution comprend un catalyseur et un filtre à particules.

D'autres caractéristiques et avantages de l'invention apparaîtront à la lecture de la description détaillée des modes de réalisation de l'invention, donnés à titre d'exemple uniquement, et en référence aux dessins qui montrent :

- la figure 1, la ligne d'échappement du moteur thermique d'une forme de réalisation d'un véhicule automobile selon l'invention,

- la figure 2, une vue en coupe d'une sonde à oxygène de la figure 1 et du circuit de connexion électrique de ladite sonde,

- la figure 3, une courbe représentant des mesures effectuées par des sondes à oxygène de la figure 1,

- la figure 4, une courbe d'une tension mesurée par une sonde à oxygène de la figure 1, et

- la figure 5, une courbe de la résistance de la sonde à oxygène en fonction de la température.

Dans ce qui va suivre, les modes de réalisation décrits s'attachent plus particulièrement à une mise en œuvre du procédé selon l'invention au sein d'un véhicule automobile. Cependant, toute mise en œuvre dans un contexte différent, en particulier dans tout type de véhicule, est également visée par la présente invention.

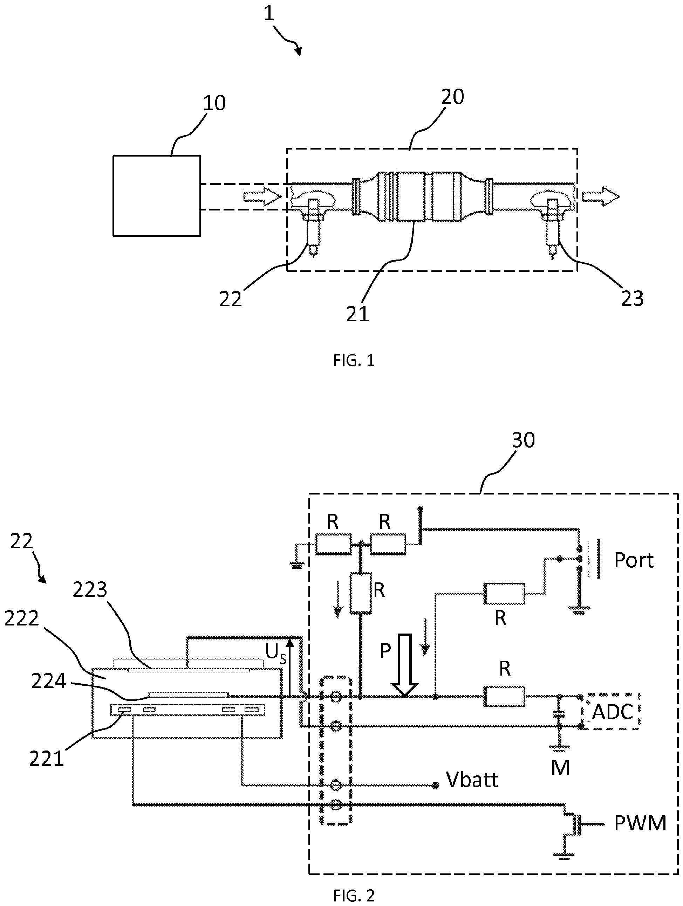

Comme illustré sur la figure 1, un véhicule automobile 1 comprend un moteur thermique 10 et une ligne d'échappement 20 des gaz d'échappement émis par ledit moteur thermique 10.

Le moteur thermique 10 comprend une chambre de combustion (non représentée) dans laquelle du carburant et du comburant sont mélangés. Le carburant peut, par exemple, être de l'essence, et être injecté dans la chambre de combustion par un injecteur (non représenté), notamment par un système d'injection directe. Le comburant peut, par exemple, être de l'air.

La combustion du mélange dans la chambre de combustion entraîne un piston (non représenté) en translation, ce qui permet de transformer l'énergie thermique de la combustion en énergie mécanique afin d'entraîner l'arbre du moteur 10 en rotation.

Lors de la combustion du mélange, des gaz d'échappement sont formés. De tels gaz d'échappement comprennent notamment des gaz, tels que, par exemple, de l'oxyde d'azote, dont la teneur dans les gaz d'échappement est réglementée par des normes.

Lorsque la quantité d'air injectée dans la chambre de combustion est supérieure à la quantité d'air nécessaire pour que la combustion du carburant soit complète, on parle de mélange pauvre. Lorsque la quantité d'air injectée est inférieure à la quantité d'air nécessaire, on parle de mélange riche. Dans ce dernier cas, tout le carburant n'est pas brûlé, on parle de combustion incomplète et le carburant imbrûlé peut être évacué par la ligne d'échappement 20, ce qui augmente la quantité de gaz polluant rejeté par le moteur 10.

Après la combustion, les gaz d'échappement sont évacués par la ligne d'échappement 20 permettant également de post-traiter au moins partiellement ces gaz d'échappement.

Pour ce faire, la ligne d'échappement 20 comprend, dans cet exemple, un dispositif de dépollution 21, une sonde 22 à oxygène amont placée en amont du dispositif de dépollution 21 et une sonde 23 à oxygène aval placée en aval du dispositif de dépollution 21.

Le dispositif de dépollution 21 comprend un catalyseur et un filtre à particules placé en aval du catalyseur.

Le catalyseur, également désigné catalyseur d'oxydation, permet d'oxyder les gaz d'échappement, notamment le monoxyde de carbone compris dans les gaz d'échappement afin de former du dioxyde de carbone, moins polluant.

La capacité de stockage d'oxygène, également désigné OSC, représentant l'efficacité du catalyseur, peut varier selon l'état d'usure du catalyseur.

Dans le cas d'un moteur thermique à essence, le catalyseur est un catalyseur trois voies, également désigné TWC pour Three-Way Catalyst en langue anglaise.

Le filtre à particules, également désigné GPF pour Gasoline Particular Filters en langue anglaise pour un moteur à essence, permet de retenir les particules polluantes des gaz d'échappement et les brûle lors d'une phase dite de régénération.

Un tel filtre à particules pour moteur 10 à essence est dit passif car les phases de régénération sont effectuées de manière passive lorsque le taux d'oxygène des gaz d'échappement dépasse un seuil prédéterminé.

Les particules retenues dans le filtre à particules sont alors brûlées par une autocombustion.

Les gaz d'échappement sont ainsi dépollués grâce à la combustion des particules polluantes dans le filtre à particules.

La sonde à oxygène amont 22 et la sonde à oxygène aval 23 sont des sondes à oxygène adaptées pour mesurer le taux d'oxygène dans les gaz d'échappement en amont et en aval du dispositif de dépollution 21.

Comme illustré à la figure 2, une sonde à oxygène 22, 23, également désignée « sonde planar » en langue anglaise, comprend un élément chauffant 221 afin de maintenir la température constante au sein de la sonde à oxygène 22, 23, une couche 222, de préférence réalisée en céramique, de protection de l'élément électrique 221, une première électrode 223 située à l'extérieur de la couche de protection 222 afin d'être en contact avec les gaz d'échappement à mesurer, et une deuxième électrode 224 située à l'intérieur de la couche de protection 222. De préférence, la première et la deuxième électrode 223, 223 sont réalisées en platine.

Pour mesurer le taux d'oxygène dans les gaz d'échappement, la sonde à oxygène 22, 23 mesure la tension $U_S$ entre la première et la deuxième électrode 223, 224. Une telle tension $U_S$ représente une cellule de Nernst de la sonde à oxygène 22, 23.

La deuxième électrode 224 est située dans une cavité contenant un volume d'air de référence. De préférence la cavité communique avec l'atmosphère afin que l'air de référence soit l'air de l'atmosphère. Ainsi, la mesure du taux d'oxygène dans les gaz d'échappement est réalisée par référence à l'air présent dans la cavité. Une telle sonde à oxygène 22, 23 à référence d'air est également désignée sonde à oxygène de zircone. Le Zircone étant un matériau ayant la capacité de laisser passer les ions oxygènes, le courant électrique associé à ce passage d'ions est proportionnel au taux d'oxygène dans les gaz d'échappement. Ainsi, la mesure de ce courant électrique permet à la sonde à oxygène 22, 23 de mesurer le taux d'oxygène.

L'élément chauffant 221, de préférence de type électrique, permet de maintenir constante la température au sein de la sonde à oxygène 22, 23 afin de prévenir la dispersion du signal électrique mesurée par la sonde à oxygène 22, 23 en fonction de la température et ainsi garantir une mesure optimale du taux d'oxygène dans les gaz d'échappement.

Une telle sonde à oxygène 22, 23 étant connue, elle ne sera pas décrite plus en détail.

Toujours en référence à la figure 2, la sonde à oxygène 22, 23 est reliée électriquement à un calculateur (non représenté) du véhicule automobile 1 par un circuit électrique 30. Le circuit électrique 30 permet d'alimenter l'élément chauffant 221 en énergie électrique, notamment en le reliant à la batterie du véhicule 1.

Le circuit électrique 30 permet également au calculateur de recevoir la valeur de la tension électrique $U_S$ mesurée aux bornes des électrodes 223, 224 afin de déterminer le taux d'oxygène dans les gaz d'échappement.

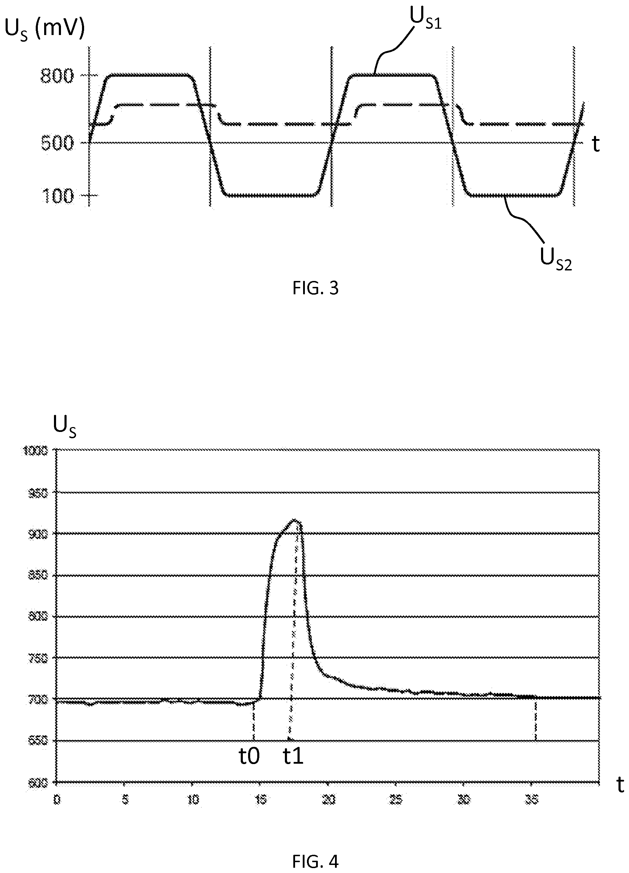

Comme illustré à la figure 3, la tension $U_{S1}$ mesurée par la sonde à oxygène amont 22 varie en fonction de la richesse du mélange injecté dans le moteur thermique 10 tandis que la variation de la tension $U_{S2}$ mesurée par la sonde à oxygène aval 23 est inférieure du fait de la dépollution des gaz d'échappement par le dispositif de dépollution 21 entre la sonde à oxygène amont 22 et la sonde à oxygène aval 23.

Ainsi, on parlera de mélange riche lorsque la tension $U_S$ est élevée, et de mélange pauvre lorsque la tension $U_S$ est faible.

La résistance R de la cellule de Nernst étant proportionnelle à la température, il est possible d'utiliser la sonde à oxygène 22, 23 afin de déterminer la température des gaz d'échappement comme cela sera présenté par la suite.

Il va maintenant être présenté la détermination de la température T des gaz d'échappement par une sonde à oxygène 22, 23 d'un véhicule automobile 1.

En référence à la figure 2, pour mesurer la résistance de Nernst R, le calculateur actionne le transistor Port selon une loi de commande afin d'envoyer un pulse P de courant au niveau de la cellule de Nernst de la sonde à oxygène 22, 23.

Le pulse P entraîne alors un pic de la tension $U_S$ aux bornes des électrodes 223, 224, comme illustré à la figure 4. On note t0 l'instant auquel commence le pic de tension et t1 l'instant où le pic atteint sa valeur maximale. De préférence, l'intervalle de temps entre l'instant t0 et l'instant t1 est de l'ordre de 3 ms.

La résistance de Nernst R peut alors être calculée à partir de la formule :

$$R = \frac{U(t1) - U(t0)}{I_{pulse}}$$

Où U(t1) est la tension mesurée à l'instant t1, U(t0) la tension mesurée à l'instant t0 et $I_{pulse}$ le courant du pulse P.

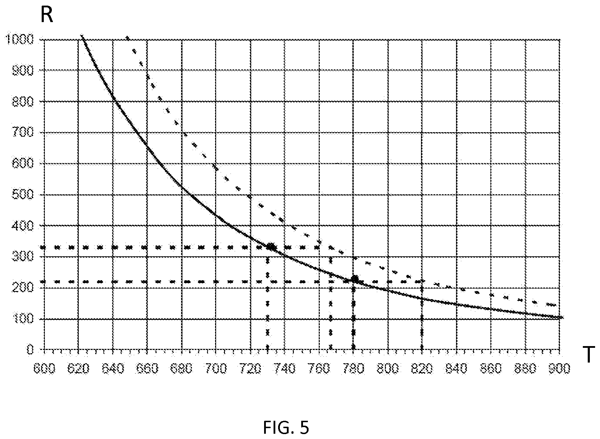

A partir de la valeur de la résistance de Nernst R ainsi calculée et d'une courbe représentant la résistance de Nernst R en fonction de la température T, telle qu'illustrée à la figure 5, le calculateur détermine la température T des gaz d'échappement au niveau de la sonde à oxygène 22, 23. Une telle courbe est également désignée graphique RBosch. Un tel graphique est prédéterminé, notamment en laboratoire.

Ainsi, il est possible de déterminer la température de la sonde à oxygène 22, 23 en générant un pulse de courant P dans la sonde à oxygène 22, 23.

Dans la suite de la description, il va être présenté le procédé de diagnostic du dispositif de dépollution 21 des gaz d'échappement d'un véhicule automobile 1 selon l'invention.

Pour diagnostiquer le dispositif de dépollution, le calculateur génère dans une première étape un pulse de courant P dans la sonde à oxygène amont 22 et dans la sonde à oxygène aval 23.

Puis, dans une deuxième étape, le calculateur détermine la température des gaz d'échappement au niveau de chacune des sondes à oxygène 22, 23 à partir de la mesure de la résistance de Nernst R de chaque sonde à oxygène 22, 23 et d'un graphique RBosch.

Lors d'un gradient thermique des gaz d'échappement, le calculateur mesure le décalage temporel dudit gradient entre la sonde à oxygène amont 22 et la sonde à oxygène aval 23. Dans ce but, le calculateur mesure l'intervalle de temps Δt entre un premier temps auquel la température T déterminée par la sonde à oxygène amont 22 atteint une valeur prédéterminée et un deuxième temps auquel la température T déterminée par la sonde à oxygène aval 23 atteint ladite valeur prédéterminée. Un tel décalage temporel est dû à l'inertie thermique du dispositif de dépollution 21.

Le calculateur détermine alors la présence du dispositif de dépollution 21 entre la sonde à oxygène amont 22 et la sonde à oxygène aval 23 si l'intervalle de temps Δt est supérieur à une valeur prédéterminée, représentative de l'inertie du dispositif de dépollution 21.

Si l'intervalle de temps Δt est inférieur à la valeur prédéterminée, le calculateur détermine l'absence du dispositif de dépollution 21, ou bien un dispositif de dépollution 21 dont l'efficacité est insuffisante.

Si la température déterminée par la sonde à oxygène aval 23 est supérieure à la température déterminée par la sonde à oxygène amont 22, le calculateur détecte un écart de température positif, autrement dit une augmentation de la température T entre la sonde à oxygène amont 22 et la sonde à oxygène aval 23. Une telle augmentation de la température T est engendrée par la réaction exothermique dans le filtre à particules lorsque ce dernier est en mode régénération, soit quand les gaz d'échappement brûlent.

Il est ainsi possible de déterminer la présence du dispositif de dépollution ainsi que la phase de fonctionnement du filtre à particules en mode régénération passive.

**Revendications**

1. Procédé de diagnostic d'un dispositif (21) de dépollution d'un véhicule automobile (1), ledit véhicule (1) comprenant un moteur (10) thermique à essence et un dispositif de dépollution (21) des gaz d'échappement dudit moteur thermique à essence (10), lesdits gaz d'échappement étant adaptés pour traverser ledit dispositif de dépollution (21) d'amont en aval, ledit véhicule (1) comprenant une sonde (22) à oxygène amont placée en amont du dispositif de dépollution (21) et une sonde (23) à oxygène aval placée en aval du dispositif de dépollution (21), ledit procédé comprenant :

- une étape de détermination de la température (T) des gaz d'échappement par la sonde à oxygène amont (22),
- une étape de détermination de la température (T) des gaz d'échappement par la sonde à oxygène aval (23),
- une étape de détection de la présence du dispositif de dépollution (21) entre les sondes à oxygène (22, 23) si l'intervalle de temps (Δt) entre un premier temps auquel la température (T) déterminée par la sonde à oxygène amont (22) atteint une valeur prédéterminée et un deuxième temps auquel la température (T) déterminée par la sonde à oxygène aval (23) atteint ladite valeur prédéterminée est supérieur à une valeur seuil d'intervalle prédéterminée,

**Caractérisé en ce qu'**il comprend :

- une étape de détermination de la régénération du dispositif de dépollution (21) si les températures (T) déterminées entraînent la détection d'un phénomène exothermique entre ladite sonde à oxygène amont (22) et ladite sonde aval (23).

2. Procédé selon la revendication précédente, comprenant une étape préliminaire d'augmentation de la richesse du mélange injecté dans le moteur thermique (10) et une étape préliminaire de diminution de la richesse du mélange injecté dans le moteur thermique (10) de manière à générer une variation de la température (T) des gaz d'échappement.

3. Procédé selon l'une des revendications précédentes, dans lequel chaque étape de détermination de la température (T) comprend une sous-étape de génération d'un pic de courant dans la sonde à oxygène (22, 23).

4. Procédé selon la revendication précédente, dans lequel chaque étape de détermination de la température (T) comprend une sous-étape de mesure de la valeur de la résistance (R) de Nernst de la sonde à oxygène (22, 23) lors dudit pic de courant.

5. Procédé selon la revendication précédente, dans lequel chaque étape de détermination de la température (T) comprend une sous-étape de détermination de la température (T) à partir de ladite valeur de la résistance de Nernst (R) mesurée et d'une courbe prédéterminée représentant la résistance de Nernst (R) en fonction de la température (T).

6. Procédé selon l'une des revendications précédentes, dans lequel le dispositif de dépollution (21) comprend un catalyseur et un filtre à particules.

7. Procédé selon la revendication précédente, dans lequel la régénération du dispositif de dépollution (21) comprend la régénération passive du filtre à particules.

8. Véhicule automobile (1) comprenant un moteur thermique (10) à essence et un dispositif de dépollution (21) des gaz d'échappement dudit moteur thermique à essence (10), lesdits gaz d'échappement étant adaptés pour traverser ledit dispositif de dépollution (21) d'amont en aval, ledit véhicule (1) comprenant une sonde à oxygène amont (22) placée en amont du dispositif de dépollution (21) et une sonde à oxygène aval (23) placée en aval du dispositif de dépollution (21), ledit véhicule (1) comprenant un calculateur configuré pour mettre en œuvre le procédé selon l'une des revendications précédentes, de diagnostic dudit dispositif de dépollution (21).

9. Véhicule (1) selon la revendication précédente, dans lequel le dispositif de dépollution (21) comprend un catalyseur et un filtre à particules.

**Patentansprüche**

1. Diagnoseverfahren einer Dekontaminationsvorrichtung (21) eines Kraftfahrzeugs (1), wobei das Fahrzeug (1) einen Benzinverbrennungsmotor (10) und eine Dekontaminationsvorrichtung (21) der Abgase des Benzinverbrennungsmotors (10) umfasst, wobei die Abgase angepasst sind, um die Dekontaminationsvorrichtung (21) von stromaufwärts nach stromabwärts zu durchqueren, wobei das Fahrzeug (1) eine stromaufwärtige Sauerstoffsonde (22) umfasst, die stromaufwärts der Dekontaminationsvorrichtung (21) platziert ist, und eine stromabwärtige Sauerstoffsonde (23), die stromabwärts der Dekontaminationsvorrichtung (21) platziert ist, wobei das Verfahren Folgendes umfasst:

- einen Bestimmungsschritt der Temperatur (T) der Abgase durch die stromaufwärtige Sauerstoffsonde (22),
- einen Bestimmungsschritt der Temperatur (T) der Abgase durch die stromabwärtige Sauerstoffsonde (23),
- einen Erfassungsschritt der Anwesenheit der Dekontaminationsvorrichtung (21) zwischen den Sauerstoffsonden (22, 23), falls das Zeitintervall ($\Delta$t) zwischen einer ersten Zeit, zu der die Temperatur (T), die von der stromaufwärtigen Sauerstoffsonde (22) bestimmt wird, einen vorbestimmten Wert erreicht, und einer zweiten Zeit, zu der die Temperatur (T), die von der stromabwärtigen Sauerstoffsonde (23) bestimmt wird, den vorbestimmten Wert erreicht, größer ist als ein vorbestimmter Intervallschwellenwert,

**dadurch gekennzeichnet, dass** es Folgendes umfasst:

- einen Bestimmungsschritt der Regenerierung der Dekontaminationsvorrichtung (21), falls die bestimmten Temperaturen (T) das Erfassen einer exothermen Erscheinung zwischen der stromaufwärtigen Sauerstoffsonde (22) und der stromabwärtigen Sauerstoffsonde (23) nach sich ziehen.

2. Verfahren nach dem vorstehenden Anspruch, das einen Vorabschritt des Steigens der Reichhaltigkeit des Gemischs, das in die Brennkraftmaschine (10) eingespritzt wird, und einen Vorabschritt des Verringerns der Reichhaltigkeit des Gemischs, das in die Brennkraftmaschine (10) eingespritzt wird, derart umfasst, dass eine Variation der Temperatur (T) der Abgase erzeugt wird.

3. Verfahren nach einem der vorstehenden Ansprüche, wobei jeder Bestimmungsschritt der Temperatur (T) einen Unterschritt des Erzeugens einer Stromspitze in der Sauerstoffsonden (22, 23) umfasst.

4. Verfahren nach dem vorstehenden Anspruch, wobei jeder Bestimmungsort der Temperatur (T) einen Unterschritt des Messens des Werts des Nernst-Widerstands (R) der Sauerstoffsonden (22, 23) bei der Stromspitze umfasst.

5. Verfahren nach dem vorstehenden Anspruch, wobei jeder Bestimmungsschritt der Temperatur (T) einen Bestimmungsunterschritt der Temperatur (T) ausgehend von dem gemessenen Nernst-Widerstandswert (R) und einer vorbestimmten Kurve, die den Nernst-Widerstand (R) in Abhängigkeit von der Temperatur (T) darstellt, umfasst.

6. Verfahren nach einem der vorstehenden Ansprüche, wobei die Dekontaminationsvorrichtung (21) einen Katalysator und ein Partikelfilter umfasst.

7. Verfahren nach dem vorstehenden Anspruch, wobei das Regenerieren der Dekontaminationsvorrichtung (21) das passive Regenerieren des Partikelfilters umfasst.

8. Kraftfahrzeug (1) das einen Benzinverbrennungsmotor (10) und eine Dekontaminationsvorrichtung (21) der Abgase des Benzinverbrennungsmotors (10) umfasst, wobei die Abgase angepasst sind, um die Dekontaminationsvorrichtung (21) von stromaufwärts nach stromabwärts zu durchqueren, wobei das Fahrzeug (1) eine stromaufwärtige Sauerstoffsonde(22) umfasst, die stromaufwärts der Dekontaminationsvorrichtung (21) platziert ist, und eine stromabwärtige Sauerstoffsonde (23), die stromabwärts der Dekontaminationsvorrichtung (21) platziert ist, wobei das Fahrzeug (1) einen Rechner umfasst, der konfiguriert ist, um das Umsetzen des Verfahrens nach einem der vorstehenden Ansprüche zur Diagnose der Dekontaminationsvorrichtung (21) umzusetzen.

9. Fahrzeug (1) nach dem vorstehenden Anspruch, wobei die Dekontaminationsvorrichtung (21) einen Katalysator und ein Partikelfilter umfasst.

**Claims**

1. A diagnostic method of a depollution device (21) of a motor vehicle (1), said vehicle (1) including a petrol-driven heat engine (10) and a depollution device (21) of the exhaust gases of said petrol-driven heat engine (10), said exhaust gases being designed to pass through said depollution device (21) from upstream to downstream, said vehicle (1) including an upstream oxygen probe (22) placed upstream of the depollution device (21) and a downstream oxygen probe (23) placed downstream of the depollution device (21), said method including:

    - a step of determining the temperature (T) of the exhaust gases by the upstream oxygen probe (22),
    - a step of determining the temperature (T) of the exhaust gases by the downstream oxygen probe (23),
    - a step of detecting the presence of the depollution device (21) between the oxygen probes (22, 23) if the time interval ($\Delta t$) between a first time at which the temperature (T) determined by the upstream oxygen probe (22) reaches a predetermined value and a second time at which the temperature (T) determined by the downstream oxygen probe (23) reaches said predetermined value is greater than a predetermined interval threshold value,
    **characterized in that**
    - a step of determining the regeneration of the depollution device (21) if the determined temperatures (T) bring about the detection of an exothermic phenomenon between said upstream oxygen probe (22) and said downstream probe (23).

2. The method according to the preceding claim, including a preliminary step of increasing the richness of the mixture injected in the heat engine (10) and a preliminary step of reducing the richness of the mixture injected in the heat engine (10) so as to generate a variation of the temperature (T) of the exhaust gases.

3. The method according to one of the preceding claims, in which each step of determining the temperature (T) includes a sub-step of generation of a current peak in the oxygen probe (22, 23).

4. The method according to the preceding claim, in which each step of determining the temperature (T) includes a sub-step of measuring the Nernst resistance value (R) of the oxygen probe (22, 23) during said current peak.

5. The method according to the preceding claim, in which each step of determining the temperature (T) includes a sub-step of determining the temperature (T) from said measured Nernst resistance value (R), and a predetermined curve representing the Nernst resistance (R) as a function of the temperature (T).

6. The method according to one of the preceding claims, in which the depollution device (21) includes a catalyst and a particle filter.

7. The method according to the preceding claim, in which the regeneration of the depollution device (21) includes the passive regeneration of the particle filter.

8. A motor vehicle (1) including a petrol-driven heat engine (10) and a depollution device (21) of the exhaust gases of said petrol-driven heat engine (10), said exhaust gases being designed to pass through said depollution device (21) from upstream to downstream, said vehicle (1) including an upstream oxygen probe (22) placed upstream of the depollution device (21) and a downstream oxygen probe (23) placed downstream of the depollution device (21), said vehicle (1) including a computer configured to implement the method according to one of the preceding claims, for diagnostics of said depollution device (21).

9. The vehicle (1) according to the preceding claim, in which the depollution device (21) includes a catalyst and a particle filter.

FIG. 1

FIG. 2

FIG. 3

FIG. 4

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2864145

- FR 3017412 A1